# EUROPÄISCHE PATENTSCHRIFT

(11) **EP 1 466 127 B1**
(45) Veröffentlichungstag und Bekanntmachung des Hinweises auf die Patenterteilung: **06.08.2014**
(21) Anmeldenummer: 02795275.3
(22) Anmeldetag: 23.12.2002
(51) Int. Cl.: F24F 11/00, B60H 1/00, B60H 3/00, G01D 3/02

(54) **VERFAHREN ZUR BELüFTUNG VON RÄUMEN**
METHOD FOR VENTILATING AREAS
PROCEDE D'AERATION D'ESPACES

(30) Priorität: 19.01.2002 DE 10201950
(43) Veröffentlichungstag der Anmeldung: 13.10.2004
(73) Patentinhaber: paragon AG, 33129 Delbrück (DE)
(72) Erfinder: MÖNKEMÖLLER, Ralf, 33335 Gütersloh (DE)
(74) Vertreter: Lelgemann, Karl-Heinz
(86) Internationale Anmeldenummer: PCT/EP2002/014770
(87) Internationale Veröffentlichungsnummer: WO 2003/060386

(56) Entgegenhaltungen:
- EP-A- 0 789 200
- WO-A-98/23904
- FR-A- 2 485 699
- US-A- 5 254 035

## Beschreibung

Die Erfindung bezieht sich auf ein Verfahren zur Belüftung von Räumen nach dem Oberbegriff des Patentanspruchs 1.

Bei aus dem Stand der Technik bekannten Verfahren zur Belüftung von Räumen werden üblicherweise Sensoren eingesetzt, mittels denen die Beladung bzw. der Gehalt der Raumluft mit bzw. an unterschiedlichen Stoffen meßbar sind, wobei bei Überschreitung vorgegebener Schwellwerte ein Signal mittels der Sensoren erzeugt wird. Dieses Ausgangssignal der Sensoren kann weiter verarbeitet werden. Derartige bekannte Verfahren zur Belüftung von Räumen sind insoweit aufwendig, als die für die Messung bzw. Erfassung der Parameter der Raumluft eingesetzten Sensoren üblicherweise regelmäßig kalibriert werden müssen, da die Langzeitstabilität dieser Sensoren regelmäßig nicht gegeben ist. Darüber hinaus haben Luftfeuchte- und/oder Temperaturschwankungen nachteilige Auswirkungen auf die in diesen Verfahren eingesetzten Sensoren.

Aus der US-A-5 254 035 ist ein Verfahren bekannt, bei dem ein einem Parameter entsprechendes Ausgangssignal, nämlich ein einer Rauchkonzentration entsprechendes Ausgangssignal, an eine Auswerte- und Steuereinheit weitergeleitet wird. Mittels dieser Auswerte- und Steuereinheit wird eine Belüftungsvorrichtung in und außer Betrieb gesetzt, und zwar in Abhängigkeit vom an die Auswerte- und Steuereinheit weitergeleiteten Ausgangssignal.

Bei diesem bekannten Verfahrens zur In- und Außerbetriebsetzung einer Belüftungsvorrichtung wird zu Beginn des Verfahrensablaufs ein aktueller Parameterwert eingegeben, der für den folgenden Zeitraum als Referenzwert dient. Daraufhin wird nach Ablauf eines vorgegebenen Zeitraums der zu erfassende Parameter erneut gemessen. Wenn die Differenz zwischen dem zu Beginn des Ablaufprogramms gemessenen Wert und dem nach Ablauf des vorstehend angegebenen Zeitraums gemessenen Wert einen bestimmten Differenzwert überschreitet, wird die Belüftungsvorrichtung in Betrieb gesetzt. Falls jedoch der Differenzwert den vorgegebenen Differenzwert nicht überschreitet, läuft das Programm zurück zu einem Schritt, in dem erneut ein Referenzwert für den weiteren Programmablauf gesetzt wird, d.h., ohne dass ein Belüftungsvorgang stattfindet, wird der Referenzwert des zu erfassenden Parameters geändert. Ein Belüftungsvorgang wird unabhängig vom Absolutwert des zu erfassenden Parameters immer dann und nur dann eingeleitet, wenn die in einem vorgebbaren Zeitraum auftretende Differenz die ses zu erfassenden Parameters eine vorgebbare Differenz übersteigt. Zwischen zwei Belüftungsvorgängen kann sich der Referenzwert des zu erfassenden Parameters beträchtlich ändern. Dies ist insbesondere dann möglich, wenn die Änderungen des zu erfassenden Parameters allmählich und mit einer vergleichsweise geringen Veränderungsrate stattfinden. Um hiermit einhergehende Nachteile zu vermeiden, wird im Falle des bekannten Verfahrens vorgeschlagen, diesen Differenzwert, der eine Inbetriebsetzung der Belüftungsvorrichtung bewirkt, zu verkleinern.

Ausgehend von dem vorstehend geschilderten Stand der Technik liegt der Erfindung die Aufgabe zugrunde, ein mit vergleichsweise einfachen Mitteln zu realisierndes Verfahren zur Verfügung zu stellen, bei dem wirtschaftlich wenig aufwendige, relativ messende und nicht kalibrierte Sensoren eingesetzt werden können.

Diese Aufgabe wird erfindungsgemäß durch die Merkmale im kennzeichnenden Teil des Patentanspruchs 1 gelöst.

Erfindungsgemäß wird nach jedem Belüftungsvorgang ein neuer Referenzwert vorgegeben, und zwar unabhängig davon, welche Luftqualität innerhalb des gerade belüfteten Raums nach Beendigung des Belüftungsvorgangs vorherrscht. Sofern während des auf den vollendeten Belüftungsvorgang folgenden Zeitraums der zu erfassende Parameter sich um einen vorgebbaren Differenzwert verändert, wird erfindungsgemäß der nächste Belüftungsvorgang durchgeführt, wonach erneut der sich nach dem beendeten Belüftungsvorgang ergebende Ist-Wert des zu überwachenden Parameters als neuer Referenzwert festgelegt wird. Unabhängig von der Qualität des bei der Durchführung des Verfahrens eigesetzten Sensorelements wird erfindungsgemäß erreicht, dass bei einer Veränderung des zu erfassenden Parameters, die einem bestimmten Differenzwert dieses Parameters entspricht, ein Belüftungsvorgang ausgelöst wird. Da der Referenzwert für den Zeitraum zwischen zwei Belüftungsvorgängen und der Differenzwert des Parameters für alle Belüftungsvorgänge konstant ist, lässt sich das erfindungsgemäße Verfahren mit einem vergleichsweise geringen Aufwand realisieren.

Nach einem durchgeführten Belüftungsvorgang speichert die Auswerte- und Steuereinheit den durch den im Raum befindlichen Sensor erfaßten aktuellen Meßwert als neuen Referenzwert. Im Gegensatz zur aus dem Stand der Technik bekannten kontinuierlichen Adaption erfolgt im Falle des erfindungsgemäßen Verfahrens quasi eine Selbstkalibrierung, wobei hierfür die Abfolge "Belüftungsvorgang" und "Abspeicherung des neuen Referenzwerts" ursächlich ist. Ausgangspunkt des erfindungsgemäßen Verfahrens ist die Annahme, daß nach einem Belüftungsvorgang innerhalb des zu belüftenden Raums eine gute Luftqualität vorliegt. Jede Veränderung der Luftzusammensetzung innerhalb des Raums bedeutet im Falle des erfindungsgemäßen Verfahrens zwangsläufig eine Verschlechterung der Luftqualität. Benötigt wird für die Durchführung des erfindungsgemäßen Verfahrens, wie bereits erwähnt, lediglich ein vergleichsweise kostengünstiger, relativ messender und nicht kalibrierter Sensor.

Selbstverständlich ist es möglich, das erfindungsgemäße Verfahren zur Belüftung von Räumen auch mit absolut messenden Sensoren einzusetzen.

Die Dauer des Belüftungsvorgangs kann zweckmäßigerweise in Abhängigkeit vom Volumen des zu belüftenden Raums und/oder von der Größe des vorgebbaren Differenzwerts eingestellt werden.

Es ist möglich, für jeden zu erfassenden Parameter der Raumluft jeweils einen speziell dazu geeigneten Sensor einzusetzen.

Gemäß einer vorteilhaften Ausführungsform des erfindungsgemäßen Verfahrens wird jedoch vorgeschlagen, für mehrere bzw. alle zu erfassenden Parameter der Raumluft einen breitbandigen Gassensor einzusetzen, so daß mittels eines einzigen Sensors z.B. der Ozongehalt, der durch den Betrieb von Laserdruckern veränderbar ist, der Lösungsmittelgehalt, der Kochdampfgehalt etc. detektiert werden können.

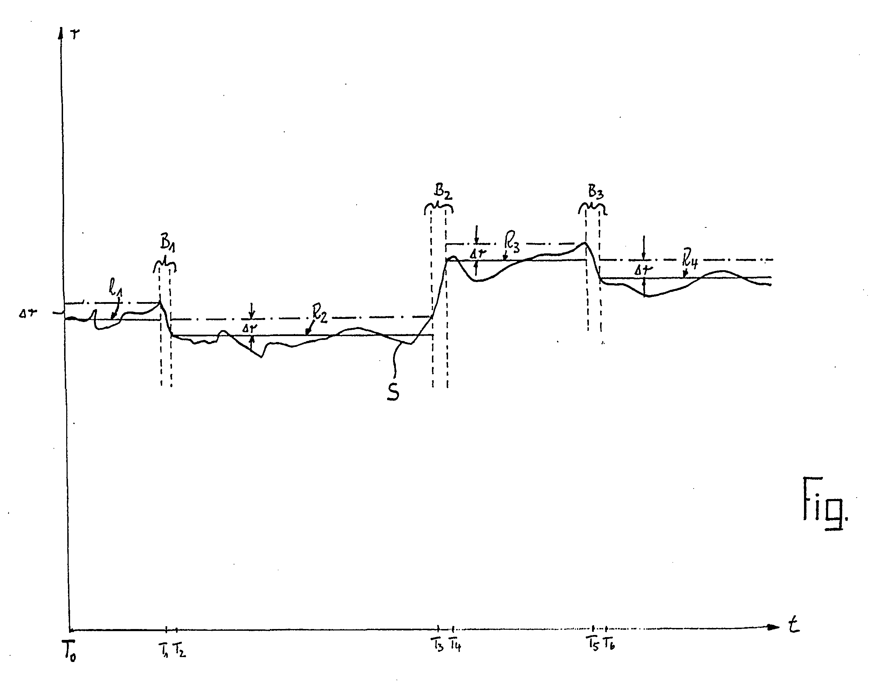

Im folgenden wird anhand einer Ausführungsform unter Bezugnahme auf die Zeichnung das erfindungsgemäße Verfahren zur Belüftung von Räumen näher erläutert, wobei in der einzigen Figur dieses Verfahren lediglich prinzipiell dargestellt ist.

Für die Durchführung des erfindungsgemäßen Verfahrens zur Belüftung von Räumen wird ein Sensor in dem zu belüftenden Raum angeordnet. Bei dem zu belüftenden Raum kann es sich beispielsweise um den Innenraum eines Gebäudes, um eine Fahrzeugkabine, um einen Aufzug od.dgl. handeln.

Es sei darauf hingewiesen, daß im folgenden das erfindungsgemäße Verfahren zur Belüftung von Räumen lediglich prinzipiell beschrieben werden wird, wobei in dieser Beschreibung davon ausgegangen wird, daß irgendwelche Maßnahmen zur Belüftung des Raums in Abhängigkeit von einem Parameter der Raumluft erfolgen; selbstverständlich kann das erfindungsgemäße Verfahren so gestaltet werden, daß mehrere Parameter der Raumluft bei der Durchführung von Belüftungsmaßnahmen berücksichtigt werden.

Die Auswahl des im Raum anzuordnenden Sensors erfolgt selbstverständlich in Abhängigkeit davon, welcher Parameter der Raumluft erfaßt werden soll. Grundsätzlich können Halbleitergassensoren, andere Gassensoren, Staubsensoren, Feuchtigkeitssensoren etc. eingesetzt werden.

Der im zu belüftenden Raum angeordnete Sensor erzeugt ein Ausgangssignal S, dessen Verlauf in der einzigen Figur gezeigt ist. Das Ausgangssignal S entspricht dem Niveau des Parameters r in der Raumluft.

Das Ausgangssignal S wird durch den Sensor entsprechend dem Niveau des Parameters r erzeugt und vom Sensor aus an eine Auswerte- und Steuereinheit weitergeleitet. In der Auswerte- und Steuereinheit ist zum Zeitpunkt T0 ein Referenzwert Ri für den mittels des Sensors zu erfassenden Parameter r gespeichert. Des weiteren ist in der Auswerte- und Steuereinheit ein Differenzwert Δr gespeichert, um den Abweichungen des Parameters r nach oben zulässig sind.

Das Ausgangssignal schwankt nach dem Zeitpunkt T0 um den in der Auswerte- und Steuereinheit gespeicherten Referenzwert R1, bis das Ausgangssignal S zum Zeitpunkt T1 die durch den vorgegebenen Differenzwert Δr definierte Schwelle erreicht.

Zu diesem Zeitpunkt T1 wird mittels der Auswerte- und Steuereinheit eine Belüftungsvorrichtung des zu belüftenden Raums aktiviert. Diese Belüftungsvorrichtung kann in unterschiedlicher Form ausgestaltet sein. Beispielsweise kann der Belüftungsvorgang durch das Öffnen von Fenstern, Klappen etc. eingeleitet werden; darüber hinaus ist zur Durchführung des Belüftungsvorgangs der Betrieb von Ventilatoren od.dgl. möglich. Wie vorstehend erläutert, wird zum Zeitpunkt T1, in dem das Ausgangssignal S den Schwellwert erreicht, der Belüftungsvorgang eingeleitet. Dieser Belüftungsvorgang dauert bis zum Zeitpunkt T2 an. Die Dauer des Belüftungsvorgangs kann in Abhängigkeit vom Volumen des zu belüftenden Raums und in Abhängigkeit von der Größe des vorgebbaren Differenzwerts Δr eingestellt werden.

Zum Zeitpunkt T2 ist der Belüftungsvorgang beendet. In der in den zu belüftenden Raum eingeleiteten Luft hatte bei dem gezeigten Ausführungsbeispiel der Parameter r einen geringeren Wert als in der Raumluft. Zu Ende des Belüftungvorgangs hat der Parameter r und damit das Ausgangssignal S des Sensors den Wert R2, der mit Ende des Belüftungsvorgangs B1 als neuer Referenzwert R2 in der Auswerte- und Steuereinheit abgespeichert wird. Während des auf den Zeitpunkt T2 folgenden Zeitraums schwankt das Ausgangssignal S des Sensors um den neuen Referenzwert R2, bis das Ausgangssignal S zum Zeitpunkt T3 den durch den vorgebbaren Differenzwert Δr vorgegebenen Schwellwert erreicht, woraufhin ein weiterer Belüftungsvorgang B2 ausgelöst wird. Bei dem in der einzigen Figur gezeigten Verfahrensablauf ist der Parameter r in der während des Belüftungsvorgangs B2 in den zu belüftenden Raum eingeleiteten Luft größer als in der bis zum Beginn des Belüftungsvorgangs B2 im Raum befindlichen Raumluft.

Nach Ende des Belüftungsvorgangs B2 befindet sich das Ausgangssignal S des Sensors auf dem Niveau R3, der daraufhin am Ende des Belüftungsvorgangs B2 zum Zeitpunkt T4 in der Auswerte- und Steuereinheit als neuer Referenzwert R3 abgespeichert wird.

Danach überschreitet das Ausgangssignal S erst im Zeitpunkt T5 erneut den auf den neuen Referenzwert R3 bezogenen, durch den vorgebbaren Differenzwert Δr definierten Schwellwert, worauf der nächste Belüftungsvorgang B3 durchgeführt wird, der bis zum Zeitpunkt T6 dauert.

Im Zeitpunkt T6 liegt das Ausgangsignal S des Sensors auf dem Niveau R4, wobei dieses Niveau als neuer Referenzwert R4 in der Auswerte- und Steuereinheit abgespeichert wird.

Im Falle des erfindungsgemäßen Verfahrens wird nach jedem Belüftungsvorgang der dann für den zu messenden Parameter der Raumluft aktuelle Meßwert als Referenzwert für den darauf folgenden Zeitraum zugrunde gelegt, wobei eine Überschreitung dieses Referenzwerts um den vorgebbaren Differenzwert zu einem erneuten Belüftungsvorgang führt. Es erfolgt somit keine kontinuierliche Adaption, sondern vielmehr eine Selbstkalibrierung durch die Abfolge von Belüftungsvorgängen und Abspeicherungen der sich ändernden Referenzwerte.

Bei dem erfindungsgemäßen Verfahren wird davon ausgegangen, daß nach einem Belüftungsvorgang im zu belüftenden Raum eine gute Luftqualität vorliegt. Jede Veränderung des zu überwachenden Parameters r der Raumluft bedeutet für das erfindungsgemäße Verfahren zwangsläufig eine Verschlechterung der Luftqualität. Sofern diese Veränderung den vorgebbaren Differenzwert überschreitet, wird erneut ein Belüftungsvorgang ausgelöst.

Im Falle der Erfindung müssen keine exakt kalibrierten und absolut messenden Sensoren eingesetzt werden. Vielmehr können vergleichsweise preiswerte, relativ messende und nicht kalibrierte Sensoren mit Erfolg verwendet werden.

In der einzigen Figuren ist aus Klarheitsgründen lediglich eine positive Abweichung bzw. ein positiver Differenzwert Δr des Parameters r von den jeweiligen Referenzwerten R1, R2, R3 und R4 gezeigt. Selbstverständlich kann in gleicher Weise auch ein negativer Differenzwert vorgegeben werden, wobei dann ein Unterschreiten des unterhalb des jeweiligen Referenzwerts liegenden Schwellwerts zur Einleitung eines Belüftungsvorgangs führt.

Es ist möglich, für unterschiedlichste zu erfassende Parameter der Raumluft jeweils speziell geeignete Sensoren einzusetzen. Alternativ ist es möglich, für mehrere bzw. für alle zu erfassende Parameter der Raumluft einen breitbandigen Gassensor einzusetzen, mittels dem dann beispielsweise als Parameter der auf den Betrieb von Laserdruckern zurückgehende Ozongehalt der Raumluft, in der Raumluft vorhandene Lösungsmittel, Kochdämpfe etc. mit ein und demselben Gassensor detektiert werden können.

## Patentansprüche

1. Verfahren zur Belüftung von Räumen, z.B. Innenräumen, Fahrzeugkabinen, Aufzügen etc., bei dem mittels zumindest eines Sensors zumindest ein Parameter r der Raumluft erfaßt wird, ein dem zumindest einen erfaßten Parameter r der Raumluft entsprechendes Ausgangssignal (S) des zumindest einen Sensors an eine Auswerte- und Steuereinheit weitergeleitet wird und mittels der Auswerte- und Steuereinheit in Abhängigkeit vom an sie weitergeleiteten Ausgangssignal (S) eine Belüftungsvorrichtung des Raums aktiviert wird, **dadurch gekennzeichnet, dass** unmittelbar nach jedem mittels der Belüftungsvorrichtung durchgeführten Belüftungsvorgang (B1, B2, B3) des Raums das aktuelle Ausgangssignal (S) des zumindest einen Sensors in der Auswerte- und Steuereinheit als neuer Referenzwert (R2, R3, R4) für den Zeitraum bis zum folgenden Belüftungsvorgang abgespeichert wird, und dass die Auswerte- und Steuereinheit die Belüftungsvorrichtung des Raums erneut aktiviert, wenn das Ausgangssignal (S) des zumindest einen Sensors einen Signalwert annimmt, der um einen vorgebbaren Differenzwert (Δr) vom nach dem vorangegangenen Belüftungsvorgang (B1, B2, B3) abgespeicherten neuen Referenzwert (R2, R3, R4) abweicht.

2. Verfahren zur Belüftung von Räumen nach Anspruch 1, bei dem die Dauer des Belüftungsvorgangs in Abhängigkeit vom Volumen des zu belüftenden Raums eingestellt wird.

3. Verfahren zur Belüftung von Räumen nach Anspruch 1 oder 2, bei dem die Dauer des Belüftungsvorgangs in Abhängigkeit vom vorgebbaren Differenzwert (Δr) eingestellt wird.

4. Verfahren zur Belüftung von Räumen nach einem der Ansprüche 1 bis 3, bei dem als Sensor ein relativ messender, nicht kalibrierter Sensor eingesetzt wird.

5. Verfahren zur Belüftung von Räumen nach einem der Ansprüche 1 bis 4, bei dem für jeden zu erfassenden Parameter der Raumluft jeweils ein speziell geeigneter Sensor eingesetzt wird.

6. Verfahren zur Belüftung von Räumen nach einem der Ansprüche 1 bis 4, bei dem für mehrere bzw. alle zu erfassenden Parameter der Raumluft ein breitbandiger Gassensor eingesetzt wird.

## Claims

1. A method for the ventilation of spaces, e.g. interiors, vehicle cabins, lifts etc., in which at least one parameter r of the compartment air is detected by means of at least one sensor, an output signal (S), corresponding to the at least one detected parameter r of the compartment air, of the at least one sensor is transmitted to an evaluation- and control unit, and by means of the evaluation- and control unit as a function of the output signal (S) transmitted to it, a ventilation device of the space is activated, **characterized in that** directly after each ventilation process (B1, B2, B3) of the space, carried out by means of the ventilation device, the current output signal (S) of the at least one sensor is stored in the evaluation- and control unit as a new reference value (R2, R3, R4) for the period up to the following ventilation process, and that the evaluation- and control unit activates the ventilation device of the space again, when the output signal (S) of the at least one sensor assumes a signal value which deviates by a predeterminable differential value (Δr) from the new reference value (R2, R3, R4) that was stored after the preceding ventilation process (B1, B2, B3).

2. The method for the ventilation of spaces according to Claim 1, in which the duration of the ventilation process is set as a function of the volume of the space which is to be ventilated.

3. The method for the ventilation of spaces according to Claim 1 or 2, in which the duration of the ventilation process is set as a function of the predeterminable differential value (Δr).

4. The method for the ventilation of spaces according to one of Claims 1 to 3, in which a relatively measuring, non-calibrated sensor is used as sensor.

5. The method for the ventilation of spaces according to one of Claims 1 to 4, in which for each parameter of the compartment air which is to be detected, respectively a specifically suitable sensor is used.

6. The method for the ventilation of spaces according to one of Claims 1 to 4, in which for several or respectively all of the parameters of the compartment air to be detected, a wide-band gas sensor is used.

## Revendications

1. Procédé pour aérer des pièces, par exemple des espaces intérieurs, des cabines de véhicules, des ascenseurs etc., dans lequel on détecte, à l'aide d'au moins un capteur, au moins un paramètre r de l'air de la pièce, un signal de sortie (S) de l'au moins un capteur correspondant à l'au moins un paramètre r de l'air de la pièce détecté étant retransmis à une unité d'évaluation et de commande et grâce à l'unité d'évaluation et de commande, en fonction du signal de sortie (S) qui lui a été retransmis, un dispositif d'aération de la pièce étant activé, **caractérisé en ce que**, immédiatement après chaque processus d'aération (B1, B2, B3) de la pièce réalisé à l'aide du dispositif d'aération, le signal de sortie (S) actuel de l'au moins un capteur est enregistré dans l'unité d'évaluation et de commande en tant que nouvelle valeur de référence (R2, R3, R4) pendant la période allant jusqu'au prochain processus d'aération, et **en ce que** l'unité d'évaluation et de commande active de nouveau le dispositif d'aération de la pièce lorsque le signal de sortie (S) de l'au moins un capteur adopte une valeur de signal, laquelle diverge de l'ordre d'une valeur différenciatrice (Δr) prescriptible de la nouvelle valeur de référence (R2, R3, R4) enregistrée après le processus d'aération précédent.

2. Procédé pour aérer des pièces selon la revendication 1, dans lequel la durée du processus d'aération est réglée en fonction du volume de la pièce à aérer.

3. Procédé pour aérer des pièces selon la revendication 1 ou 2, dans lequel la durée du processus d'aération est réglée en fonction de la valeur différenciatrice (Δr) prescriptible.

4. Procédé pour aérer des pièces selon l'une des revendications 1 à 3, dans lequel on utilise, en guise de capteur, un capteur non calibré mesurant de manière relative.

5. Procédé pour aérer des pièces selon l'une des revendications 1 à 4, dans lequel on utilise, pour chaque paramètre de l'air de la pièce à détecter, respectivement un capteur qui convient spécialement.

6. Procédé pour aérer des pièces selon l'une des revendications 1 à 4, dans lequel on utilise un capteur de gaz à large bande pour plusieurs paramètres de l'air d'une pièce à détecter ou pour tous les paramètres.
